# EUROPEAN PATENT APPLICATION

(11) **EP 4 123 550 A1**
(43) Date of publication of application: **25.01.2023**
(21) Application number: 22185782.4
(22) Date of filing: 19.07.2022
(51) Int. Cl.: G06Q 30/02

(54) **METHOD FOR MANAGING ADVERTISEMENT**

(30) Priority: 22.07.2021 TW 110127013
(71) Applicant: SPL DESIGN CO., LTD., Taichung City 42944 (TW)
(72) Inventor: SUNG, Pei-Lun, 42944 Taichung City (TW)
(74) Representative: Stöckeler, Ferdinand

(57) **Abstract**

A method for managing advertisement that is to be performed by a server includes a step of receiving a piece of advertisement type information from an enterprise device, a step of selecting pieces of candidate user information from among pieces of user information stored in the server based on the piece of advertisement type information, a step of receiving an advertisement material from the enterprise device, a step of selecting pieces of target user information that corresponds respectively to target users from among the pieces of candidate user information, and a step of performing an advertisement-pushing procedure with respect to the target users.

## Description

The disclosure relates to advertising, and more particularly to a method for managing advertisement.

A conventional advertising method pushes an advertisement to a viewer by interrupting an activity (e.g., watching a video or playing a video game) of the viewer and forcing the viewer to view the advertisement before the activity is resumed. A drawback of this approach is that the viewer may be displeased due to the interruption, and therefore find the merchandise promoted by the advertisement unpleasant, which is unfavorable to the advertiser and reduces the effect of advertising. The conventional advertising method attempts to increase the effect of advertising by increasing advertisement exposure. However, this approach also increases the cost and is less economical.

Therefore, an object of the disclosure is to provide a method for managing advertisement that is cost effective and that improves advertising effectiveness. According to one aspect of the disclosure, the method for managing advertisement is to be performed by a server. The server is in communication with an enterprise device and multiple user devices through a communication network. The user devices are respectively possessed by multiple users. The server stores multiple pieces of user information that correspond respectively to the users, wherein each of the pieces of user information includes multiple user attributes that are associated with the corresponding user. The method includes steps of: A) receiving, from the enterprise device, a piece of advertisement type information that indicates at least one category associated with an advertisement material; B) based on the piece of advertisement type information thus received, selecting a subset of the pieces of user information to serve as pieces of candidate user information, wherein each of the pieces of candidate user information includes at least one user attribute that matches the at least one category indicated in the piece of advertisement type information thus received; C) sending, to the enterprise device, a piece of candidate information that indicates a quantity of the pieces of candidate user information thus selected, so that the enterprise device sends a piece of advertisement information that is indicative of a viewer number and an amount of investment money and that includes the advertisement material in response to receiving the piece of candidate information; D) determining the viewer number based on the piece of advertisement information after receiving the piece of advertisement information from the enterprise device; E) selecting a number N of the pieces of candidate user information to serve as pieces of target user information, the number N being larger than or equal to the viewer number thus determined; and F) performing an advertisement-pushing procedure with respect to target users that correspond respectively to the pieces of target user information. The advertisement-pushing procedure includes following sub-steps that are to be performed with respect to each of the target users: F-1) sending, to the user device that corresponds to the target user, a request for approval to provide the advertisement material on the user device; F-2) after receiving the approval from the user device, sending, to the user device, the advertisement material and a piece of mission information that is related to an interactive mission, so that the user device presents the advertisement material, guides the target user to complete the interactive mission, and sends a reply message associated with the interactive mission to the server; F-3) after receiving the reply message from the user device, determining whether content of the reply message fulfills a reward criterion; and F-4) issuing a reward to the target user when it is determined that the content of the reply message fulfills a reward criteria.

Other features and advantages of the disclosure will become apparent in the following detailed description of the embodiment (s) with reference to the accompanying drawings, of which:
Figure 1 is block diagram that exemplarily illustrates an advertising system according to an embodiment of the disclosure;
Figure 2 is a flow chart that exemplarily illustrates a method for managing advertisement according to an embodiment of the disclosure;
Figure 3 is a flow chart that exemplarily illustrates an advertisement-pushing procedure according to an embodiment of the disclosure; and
Figures 4 and 5 are each a flow chart that exemplarily illustrates additional sub-steps of the advertisement-pushing procedure according to an embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

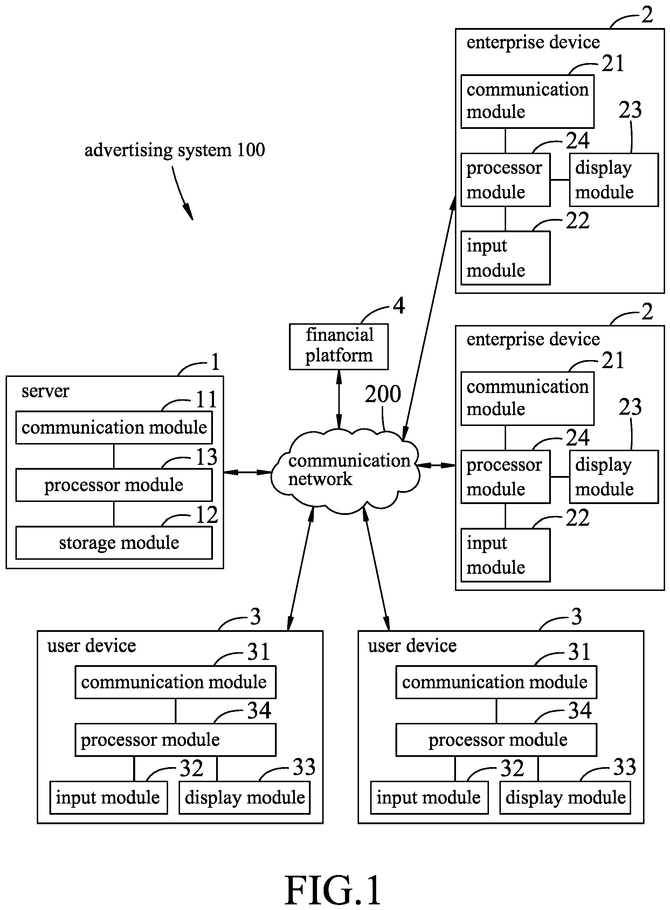

Figure 1 exemplarily illustrates an advertising system 100 according to an embodiment of the disclosure. The advertising system 100 includes a server 1 that is maintained by an advertising service entity (e.g., an advertising agency), at least one enterprise device 2 that is respectively associated with (e.g., operable by) at least one enterprise entity, multiple user devices 3 that are respectively associated with multiple users, and a financial platform 4 that maintains and manages multiple financial accounts. The server 1 is in communication with the enterprise device (s) 2, the user devices 3 and the financial platform 4 through a communication network 200. Although two enterprise devices 2 and two user devices 3 are illustrated in Figure 1, the disclosure is not limited to these quantities. That is, the advertising system 100 may include only one enterprise device 2 or three or more enterprise devices 2, and may include three or more user devices 3. According to some embodiments, the financial platform 4 may be a banking system, and the communication network 200 may be the Internet.

The server 1 includes a communication module 11 that connects to the communication network 200, a storage module 12, and a processor module 13 that is electrically connected to the communication module 11 and the storage module 12. According to some embodiments, the server 1 may be, for example, a server computer, a desktop computer or a cloud host, the communication module 11 may be a communication interface included in the server computer/desktop computer/cloud host, the storage module 12 may be a computer memory, and the processor module 13 may be a central processing unit (CPU).

The storage module 12 of the server 1 stores multiple pieces of user information that correspond respectively to the users. The storage module 12 also stores a service account and at least one enterprise account that are managed by the financial platform 4, wherein the service account is associated with the advertising service entity, and the at least one enterprise account is respectively associated with the at least one enterprise entity. The storage module 12 further stores a count value.

Each of the pieces of user information includes multiple user attributes, personal information, a user account and a digital wallet that correspond to the corresponding user, wherein the user account is managed by the financial platform 4 and tokens are deposited in the digital wallet. According to some embodiments, the user attributes may include items such as gender, age, physical address (e.g., mailing or residence address), e-mail address, education level, income level, occupation, interest(s), network browsing information (which may be related to browser cookies, keywords previously inputted for online search, videos watched online, articles viewed online, articles or comments published online, and/or accounts followed online and/or online friends), places visited (or checked-in on social media), purchase history (which may be related to e-shopping history, stores at which mobile payment was conducted, and/or purchased items), information on installed mobile applications (i.e., apps) (which may be related to categories of the apps and/or times at which the apps were installed), mobile positioning information, and/or mobile device information (which may be related to an Internet domain, a model number, and/or a communication service provider (CSP)), but the disclosure is not limited thereto. The user attributes may be obtained by accessing data stored in the user device 3 and/or by sending inquiries to the user. For example, the server 1 may acquire information such as network browsing information, places visited, purchase history and mobile positioning information that are associated with the user by accessing, through the communication network 200, data stored in the user device 3 possessed by the user, under permission of the user. For example, the server 1 may acquire information about the e-mail address, the education level, the income level, the occupation and the interest (s) that are associated with the user by sending a questionnaire to the user device 3 possessed by the user for the user to answer.

According to some embodiments, the personal information may be an image (e.g., a picture or a scanned copy) of an official document that is provided by the user. The official document is issued by a government authority and is proof of some user attributes such as the age and the physical address included in the piece of user information. The official document may be, for example, an identity (ID) card, a driver's license, a passport, etc. In some embodiments, the corresponding user attributes are extracted by the server 1 directly from the image.

Each of the enterprise devices 2 includes a communication module 21 that connects to the communication network 200, an input module 22, a display module 23, and a processor module 24 that is electrically connected to the communication module 21, the input module 22 and the display module 23. According to some embodiments, the enterprise device 2 may be, for example, a desktop computer, a server computer or a cloud host, the communication module 21 may be a communication interface included in the desktop computer/server computer/cloud host, the input module 22 may be a touch panel or a keyboard and mouse set, the display module 23 may be a display screen, and the processor module 24 may be a CPU. The enterprise device 2 is configured to generate a piece of advertisement type information and a piece of advertisement information that are associated with an advertisement material. The piece of advertisement type information indicates at least one category associated with the advertisement material. The piece of advertisement information includes the advertisement material, and is indicative of a viewer number and an amount of investment money.

Each of the user devices 3 includes a communication module 31 that connects to the communication network 200, an input module 32, a display module 33, and a processor module 34 that is electrically connected to the communication module 31, the input module 32 and the display module 33. According to some embodiments, the user device 3 may be, for example, a tablet computer, a notebook computer, a smart phone or a desktop computer, the communication module 31 may be a communication interface included in the tablet computer/notebook computer/smart phone/desktop computer, the input module 32 may be a touch panel or a keyboard and mouse set, the display module 33 may be a display screen, and the processor module 34 may be a CPU. Each of the user devices 3 is installed with an application (which may be an app in cases where the user device 3 is a tablet computer or a smart phone) that is configured to interact with the server 1 and that corresponds to a method for managing advertisement, which will be described in detail hereinafter.

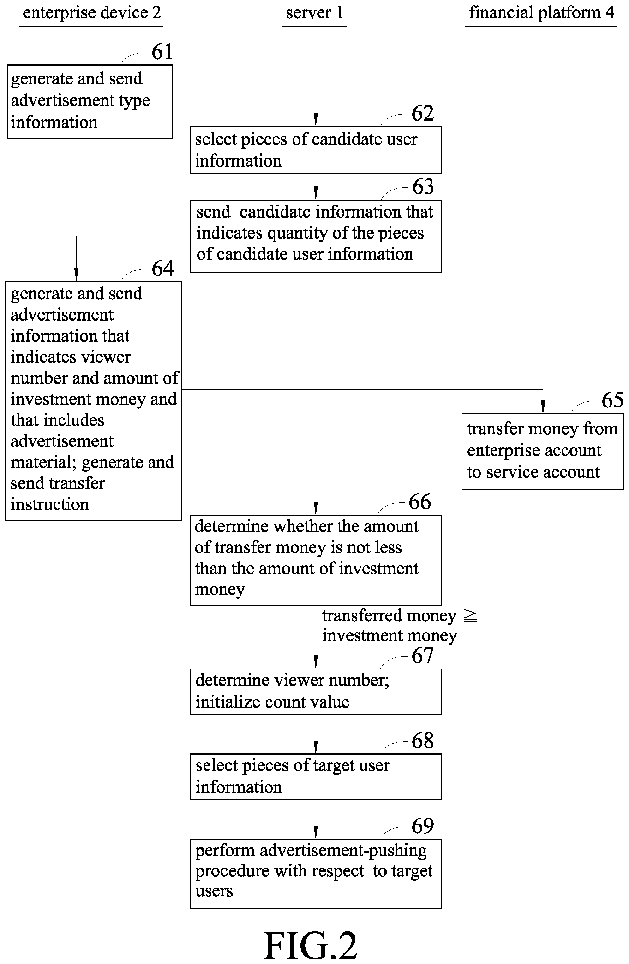

Figure 2 exemplarily illustrates the method for managing advertisement that is to be performed by the advertising system 100 according to an embodiment of the disclosure. Referring to Figure 2, the method includes Steps 61-69.

In Step 61, the processor module 24 of one enterprise device 2 generates, based on instructions inputted to the enterprise device 2 via the input module 22 of the one enterprise device 2 by a staff member of one enterprise entity associated with the one enterprise device 2, a piece of advertisement type information that indicates at least one category associated with an advertisement material, which may be an advertisement video, and sends the piece of advertisement type information to the server 1 through the communication module 21 of the one enterprise device 2. The at least one category may include but not limited to car, houseware, cosmetics, tobacco and/or alcohol, etc. In some embodiments, the piece of advertisement type information further indicates a time length of the advertisement material and/or a type of targeted audience.

In Step 62, the processor module 13 of the server 1 receives, through the communication module 11, the piece of advertisement type information from the one enterprise device 2, and selects, based on the piece of advertisement type information thus received, a subset of the pieces of user information to serve as pieces of candidate user information. Each of the pieces of candidate user information indicates at least one user attribute that matches the at least one category indicated in the piece of advertisement type information.

According to some embodiments, the pieces of candidate user information may be selected based on relevance levels respectively of the pieces of user information with respect to the piece of advertisement type information, where the relevance levels are determined by performing association analysis on the user attributes of each of the pieces of user information and the at least one category (and perhaps also the type of targeted audience) indicated in the piece of advertisement type information. The relevance level indicates a likelihood that the user corresponding to the respective piece of user information would be interested in the merchandise promoted by the advertisement material associated with the piece of advertisement type information. The association analysis may be implemented using a machine learning model that has been trained and is stored in the storage module 12 of the server 1. The machine learning model is configured such that when the merchandise is age restricted, e.g., a minimum legal age of 21 for alcohol in the United States, a relevance level of zero is determined with respect to the pieces of user information that have the user attributes indicating an age below the minimum legal age.

After determining the relevance levels of the pieces of user information, the processor module 13 may sort the pieces of user information in a descending order of the relevance levels, and select the pieces of user information that have relevance levels which meet a predetermined criterion to serve as the pieces of candidate user information. In an embodiment, the criterion is a corresponding likelihood no less than 30%, but the disclosure is not limited thereto. By selecting the pieces of user information that have higher relevance levels to serve as the pieces of candidate user information, potential customers are effectively picked out, so the advertising effectiveness is increased. It is noteworthy that because evaluating the relevance levels does not necessarily involve advertising conditions (e.g., when or to whom the advertisement is to be given) given by an advertiser (i.e., the enterprise entity), the increased advertising effectiveness can be achieved even if the enterprise entity does not have a good understanding of the market of its own product.

In an embodiment where the enterprise entity is a cosmetic shop located in Taipei city, a staff of the enterprise entity operates the enterprise device 2 to generate the piece of advertisement type information that indicates a category of "cosmetics" and a type of targeted audience of a female between the ages of 25 and 35 who lives in Taipei city, and send the piece of advertisement type information to the server 1. The server 1, upon receiving the piece of advertisement type information, ignores (e.g., by setting a relevance level to zero) the pieces of user information that do not have the user attributes indicating a gender of female, an age within the range of from 25 to 35 years or a physical address in Taipei city, and performs association analysis on the user attributes of each of the remaining pieces of user information and the category of "cosmetics" by means of the trained machine learning model. Multiple self-generated factors are generated, and weights respectively of these self-generated factors are determined by means of the server. In this embodiment, with respect to the "cosmetics" category, the self-generated factors relate to how many shopping-related applications (e.g., shopping apps) are installed in the user device 3 associated with the user that corresponds to the piece of user information, whether the "network browsing information" attribute indicates that the corresponding user follows a beauty influencer (e.g., a beauty blogger or a beauty vlogger) on social media, whether the "network browsing information" attribute indicates that the corresponding user has inputted a key word that is related to cosmetics for performing an online search, and whether the "mobile positioning information" attribute indicates that the corresponding user frequently visited shopping venues such as shopping malls, department stores, etc. The trained machine learning model outputs a higher relevance level for a piece of user information when the "information on installed mobile applications" attribute indicates that more shopping-related applications are installed in the user device 3, when the "network browsing information" attribute indicates that the corresponding user follows a beauty influencer on social media, when the "network browsing information" attribute indicates that the corresponding user has inputted a key word that is related to cosmetics for performing an online search, and when the "mobile positioning information" attribute indicates that the corresponding user frequently visited shopping venues. The self-generated factors are generated by the server 1 based on analysis of the pieces of user information (and the multiple user attributes included therein) that are stored in the storage module 12 of the server 1, and therefore vary as the number of the pieces of user information changes and as time goes on. For each of the pieces of user information, the server 1 quantifies and/or scores the corresponding relevance level with respect to the self-generated factors, in order to deduce, for the pieces of user information, a fondness level with respect to the piece of advertisement type information. In this way, precision of advertising may be improved, and the performance of the association analysis will improve as the number of the pieces of user information grows.

In Step 63, the processor module 13 of the server 1 sends, to the one enterprise device 2, a piece of candidate information that indicates a quantity of the pieces of candidate user information thus selected.

In Step 64, the processor module 24 of the one enterprise device 2 receives the piece of candidate information from the server 1, and displays on the display module 23 the quantity of the pieces of candidate user information indicated by the piece of candidate information, so that the processor module 24, based on the quantity of the pieces of candidate user information and instructions inputted by the staff member of the one enterprise entity into the one enterprise device 2 via the input module 22 thereof, generates a piece of advertisement information that is indicative of a viewer number and an amount of investment money and that includes the advertisement material, and sends the piece of advertisement information to the server 1 through the communication module 21, wherein the viewer number is smaller than or equal to the quantity of the pieces of candidate user information. The merchandise promoted by the advertisement material may be a physical product, a digital product or a service. In some embodiments, the piece of advertisement information further indicates whether the advertisement material is to be permanently stored in the storage module 12 of the server 1 so that it can be provided to the audience at any time.

In Step 64, the processor module 24 of the one enterprise device 2 also generates, based on instructions inputted by the staff member into the enterprise device 2 via the input module 22, a transfer instruction that includes an amount of transfer money, the enterprise account associated with the one enterprise entity, and the service account, and sends the transfer instruction to the financial platform 4.

In Step 65, the financial platform 4 receives the transfer instruction from the enterprise device 2, and transfers the amount of transfer money from the enterprise account to the service account. The financial platform 4 sends a notification indicating that the amount of transfer money has been transferred from the enterprise account to the service account upon completion of the transferring.

In Step 66, the processor module 13 of the server 1 receives both of the piece of advertisement information from the one enterprise device 2 and the notification from the financial platform 4, and determines whether the amount of transfer money indicated by the notification is not less than the amount of investment money indicated by the piece of advertisement information. After it is determined that the amount of transfer money is not less than the amount of investment money, the procedure goes to Step 67. According to some embodiments, when it is determined that the amount of transfer money is less than the amount of investment money, the processor module 13 may generate a message indicating that the amount of transfer money is insufficient, and send the message to the one enterprise device 2.

In Step 67, the processor module 13 of the server 1 determines the viewer number based on the piece of advertisement information, and initializes a count value that is stored in the storage module 12 of the server 1 to be equal to the viewer number thus determined. In some embodiments, the piece of advertisement information directly indicates the viewer number by including the viewer number in the piece of advertisement information. In some embodiments, the piece of advertisement information indirectly indicates the viewer number that equals the amount of investment money divided by a reward value which is stored in the storage module 12 of the server 1 or which is included in the piece of advertisement information.

In Step 68, the processor module 13 of the server 1 selects a number N of the pieces of candidate user information to serve as pieces of target user information. The number N is larger than or equal to the viewer number, and is smaller than or equal to the quantity of the pieces of candidate user information that are selected in Step 62. In embodiments where the number N is smaller than the quantity, the number N of the pieces of candidate user information (i.e., the pieces of target user information) have relevance levels that are higher in comparison to the piece(s) of candidate user information that is/are not selected. In some embodiments, top number N of the pieces of candidate user information in terms of the relevance level with respect to the piece of advertisement type information are selected to serve as the pieces of target user information.

In Step 69, the processor module 13 of the server 1 conducts an advertisement-pushing procedure with respect to the users (also referred to as "target users" hereinafter) that correspond respectively to the pieces of target user information, so as to attempt to push the advertisement material to the target users.

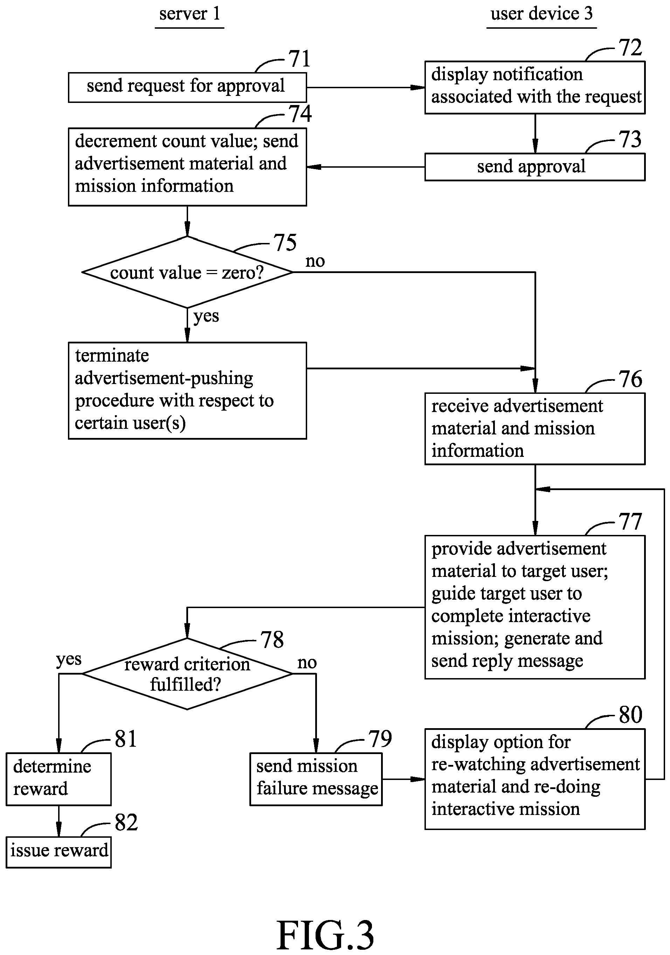

The advertisement-pushing procedure includes Sub-steps 71-82 that are illustrated in Figure 3 and that are to be performed with respect to each of the target users. Specifically, the sub-steps of Step 69 are to be performed cooperatively by the server 1 and the user device 3 that corresponds to the target user.

In Sub-step 71, the processor module 13 of the server 1 sends, to the user device 3 and over the communication network 200, a request for approval to provide the advertisement material to the user device 3.

In Sub-step 72, the processor module 34 of the user device 3 receives, through the communication module 31, the request from the server 1, and displays on the display module 33 a notification that is associated with the request. The notification is, for instance, in the form of a selectable option among at least one selectable option in an advertisement list that is displayed on the display module 33, wherein the at least one selectable option is associated respectively with at least one advertisement material. Once the notification is selected by the target user operating the input module 32, the procedure proceeds to Sub-step 73.

In Sub-step 73, the processor module 34 of the user device 3 sends, to the server 1 over the communication network 200, an approval that is associated with the request received in Sub-step 72.

In Sub-step 74, the processor module 13 of the server 1 receives the approval from the user device 3, decrements the count value by one, and sends, to the user device 3, the advertisement material and a piece of mission information that is related to an interactive mission. In some embodiments, the piece of mission information includes a questionnaire that includes questions related to the content of the advertisement material, and the interactive mission is to finish the questionnaire. In some embodiments, the piece of mission information indicates a shop, and the interactive mission is to make a purchase at the shop. In some embodiments, the piece of mission information is provided to the server 1 in advance by the enterprise device 2 that provided the advertisement material.

In Sub-step 75, the processor module 13 of the server 1 determines whether the count value equals zero, and if so, the processor module 13 of the server 1 terminates the advertisement-pushing procedure with respect to those of the target users who possess the user devices 3 from which the approvals were not received. That is, the processor module 13 sends an instruction to each of those user devices 3 to prevent the notification from being displayed on the display module 33 of such user device 3, or to discontinue display of the notification on the display module 33 of such user device 3, depending on whether the notification is already being displayed on the display module 33. In embodiments where the notification is a selectable option in an advertisement list, the processor module 34 of each of those user devices 3 deletes, in response to receiving said instruction from the server 1, the selectable option from the advertisement list.

If the processor module 13 of the server 1 determines that the count value does not equal zero in Sub-step 75, the procedure goes to Sub-step 76, where the processor module 34 of the user device 3 receives the advertisement material and the piece of mission information from the server 1.

In Sub-step 77, the processor module 34 of the user device 3 presents the advertisement material and the piece of mission information for view by the target user via the user device 3, and the target user is guided by the piece of mission information to complete the interactive mission using the user device 3. After the interactive mission is completed, the processor module 34 generates a reply message associated with the interactive mission, and sends the reply message to the server 1. In embodiments where the advertisement material is an advertisement video, the user device 3 provides the advertisement material to the target user by playing the advertisement video on the display module 33 of the user device 3. In embodiments where the interactive mission is to finish a questionnaire, the reply message is a finished questionnaire (or answers to questions in the questionnaire). In embodiments where the interactive mission is to make a purchase at a shop, the reply message is indicative of whether a purchase has been made by the target user. In an embodiment where the user device 3 is a smart phone, the processor module 34 generates the reply message indicating that a purchase has been made when the target user uses the user device 3 to scan a payment barcode that is provided at a checkout counter in the shop before a time limit of the interactive mission, and generates the reply message indicating that no purchase has been made when the time limit passes without the target user's action of using the user device 3 to scan the payment barcode.

In Sub-step 78, the processor module 13 of the server 1 receives the reply message from the user device 3, and determines whether the content of the reply message fulfills a reward criterion. If so, the procedure goes to Sub-step 81; otherwise, the procedure goes to Sub-step 79. In embodiments where the reply message is a finished questionnaire (or answers therefor), the processor module 13 determines whether the content of the reply message fulfills a reward criterion by determining a correctness rate of the finished questionnaire and determining whether the correctness rate exceeds a predetermined threshold, which may be, for example, 70%. In embodiments where the reply message is indicative of whether a purchase has been made by the target user, the processor module 13 determines whether the content of the reply message fulfills a reward criterion by determining whether the reply message indicates that a purchase has been made. According to some embodiments, determining whether the content of the reply message fulfills the reward criterion may be further based on the time when the reply message is received. In these embodiments, it is determined that the content of the reply message fulfills the reward criterion only when the reply message is received within a predetermined time period.

In Sub-step 79, the processor module 13 of the server 1 sends a mission failure message to the user device 3.

In Sub-step 80, the processor module 34 of the user device 3 displays an option on the display module 33 to prompt the user to watch the advertisement material and perform the interactive mission again. Once the option is accepted by the target user operating the input module 32, the procedure proceeds to Sub-step 77.

In Sub-step 81, the processor module 13 of the server 1 determines a reward for the target user. According to some embodiments, the processor module 13 may determine an amount of tokens as the reward.

In some embodiments, the amount of tokens is determined based on a number of the user attributes included in the piece of user information that corresponds to the target user, wherein the more the user attributes, the larger the amount of tokens. For example, in an embodiment, the reward is determined to be one token when the piece of user information includes six or less user attributes, two tokens when the piece of user information includes seven to ten user attributes, and three tokens when the piece of user information includes more than ten user attributes. In some embodiments, how much sensitive personal information is indicated by the user attributes is also taken into account when determining the amount of tokens. In these embodiments, a greater amount of sensitive personal information brings about a larger amount of tokens.

In some embodiments, the amount of tokens is the same for all of the target users and is determined based on the amount of investment money and the viewer number. For example, in some embodiments, the amount of tokens is determined as a product of a predetermined rate multiplied by a quotient of dividing the amount of investment money by the viewer number. In some embodiments, the predetermined rate is larger than or equal to 1 (e.g., 1.25 in an embodiment).

In Sub-step 82, the processor module 13 of the server 1 issues the reward to the target user. In some embodiments where the reward determined in Sub-step 81 is an amount of tokens, the processor module 13 issues the reward to the target user by adding the amount of tokens into the digital wallet that corresponds to the target user and that is stored in the storage module 12 of the server 1. The target user can use the tokens in his/her digital wallet to make purchases or donations in online shops or donation platforms that are operated by or have cooperation relationship with the advertising service entity maintaining the server 1.

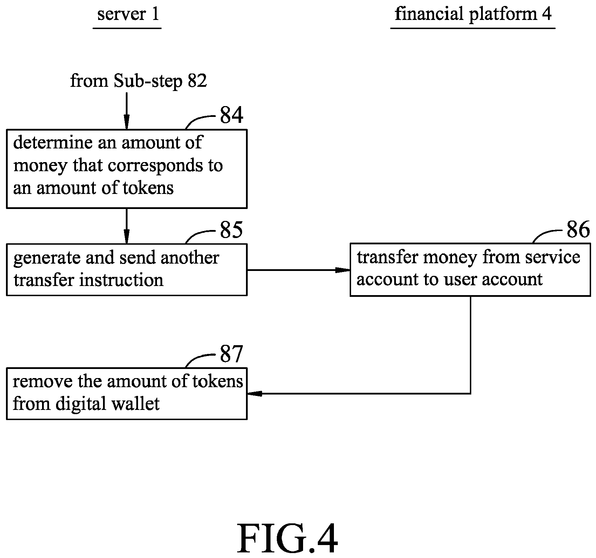

According to some embodiments, in cases where the reward determined in Sub-step 81 is an amount of tokens and where the amount of tokens is added into the digital wallet of the target user in Sub-step 82, Step 69 may further include Sub-steps 84-87 that are performed cooperatively by the server 1 and the financial platform 4 and that are to be performed after Sub-step 82 as illustrated in Figure 4.

In Sub-step 84, the processor module 13 of the server 1 determines an amount of money that corresponds to the amount of tokens. According to some embodiments, the amount of money may be equal to or less than the amount of tokens, and is determined using an exchange rate. For example, in an embodiment, an exchange rate of 0.8 from the tokens to U.S. dollar is used, so 8 dollars would be determined corresponding to 10 tokens.

In Sub-step 85, the processor module 13 of the server 1 generates another transfer instruction based on the amount of money thus determined, the service account and the user account of the target user, and sends the another transfer instruction to the financial platform 4.

In Sub-step 86, the financial platform 4 receives the another transfer instruction from the server 1, and transfers the amount of money from the service account to the user account.

In Sub-step 87, the processor module 13 of the server 1 removes the amount of tokens from the digital wallet that corresponds to the target user.

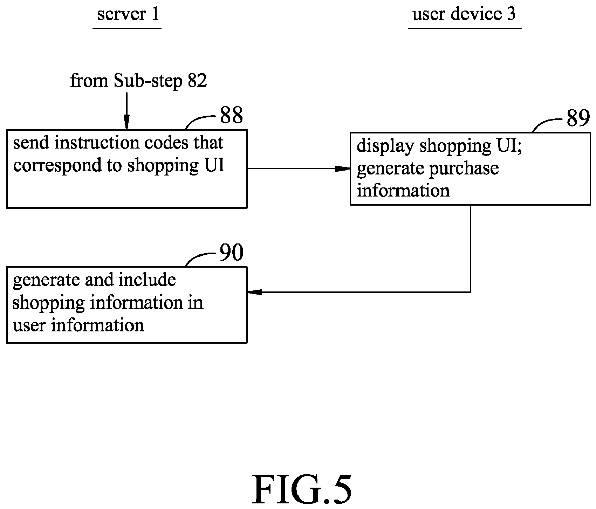

According to some embodiments, the storage module 12 of the server 1 may further store instruction codes that correspond to a shopping user interface (UI) which is configured to provide shopping guide information. With respect to these embodiments, Step 69 may further include Sub-steps 88-90 that are to be performed after Sub-step 82 as illustrated in Figure 5.

In Sub-step 88, the processor module 13 of the server 1 sends the instruction codes to the user device 3.

In Sub-step 89, the processor module 34 of the user device 3 receives the instruction codes from the server 1, executes the instruction codes, and displays the shopping UI on the display module 33 of the user device 3 to provide the shopping guide information that corresponds to the product/service promoted by the advertising material, so that the target user may make a purchase of the merchandise (which may be at least one product or service) using the user device 3. For example, the shopping guide information may be a hyperlink to open a webpage through which the target user may order the merchandise by using the tokens in his/her digital wallet, credit card, or other conversional payment means. Providing the shopping guide information in Sub-step 89 subsequent to providing the advertisement material in Sub-step 77 can increase the advertising conversion rate. Once the purchase of the merchandise is made, the processor module 34 generates a piece of purchase information that indicates the name(s) and/or the quantity of the item(s) that have been purchased.

In Sub-step 90, the processor module 13 of the server 1 receives the piece of purchase information from the user device 3, and generates a piece of shopping information based on the name(s) and/or the quantity of the item(s) indicated by the piece of purchase information, and includes the piece of shopping information in the piece of user information that corresponds to the target user (e.g., the piece of shopping information may be incorporated into the purchase history attribute included in the piece of user information). When more content is included in the piece of user information, the effect of the association analysis performed with respect to the piece of user information is improved, so precision of advertising using the method for managing advertisement disclosed herein is automatically improved while performing the method.

According to some embodiments, the processor module 13 may collect the pieces of purchase information that are received from the user devices 3 to evaluate an interest level in respect of how much the advertisement material attracts the target users, and to calculate an advertising conversion rate related to the advertisement material. The interest level thus evaluated and the advertising conversion rate thus calculated may be provided to the enterprise entity associated with the one enterprise device 2.

The method for managing advertisement disclosed herein is beneficial in that in Step 62, potential customers are effectively picked out by calculating relevance levels respectively of the pieces of user information with respect to the piece of advertisement type information, so that the advertiser may target advertising at these potential customers to increase the advertising effectiveness.

The method is also beneficial in that the advertiser may determine the cost of the advertisement freely by determining the viewer number in Step 64, wherein the cost raises as the viewer number increases.

The method is also beneficial in that the server 1 only sends the advertisement material and the piece of mission information to a number of user devices that is limited by the viewer number, so that the operation load and transmission load of the server 1 are lessened.

The method is also beneficial in that the advertisement material is presented to the users (i.e., the advertisement viewers) only after the users clearly express their intention to watch the advertisement material (with an incentive caused by the reward) . Therefore, it is guaranteed that the actual viewers of the advertisement material have consented to watching the advertisement material, and will not be displeased for being forced to watch the advertisement material. The users' consent to watching the advertisement material further increases the advertising effectiveness.

The method is also beneficial in that the interactive mission to be completed by the user after watching the advertisement material helps to enhance the uses' understanding of the message that the advertiser intends to deliver via the advertisement material, thereby increasing the advertising effectiveness.

The method is also beneficial in that the shopping guide information provided to the user in Sub-step 89 may bring about a direct and positive effect of the advertising.

The method is also beneficial in that by verifying the user attributes such as the age and the physical address that are included in the piece of user information using a government-issued official document, which is provided by the user with an incentive caused by the reward, advertising an age-restricted merchandise to people that are underage can be prevented, and advertising a merchandise that is exclusive to a specific geographical region to people who do not live in that region can also be prevented.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A method for managing advertisement that is to be performed by a server (1), the server (1) being in communication with an enterprise device (2) and multiple user devices (3) through a communication network (200), the user devices (3) being respectively possessed by multiple users, the server (1) storing multiple pieces of user information that correspond respectively to the users, each of the pieces of user information including multiple user attributes that are associated with the corresponding user, the method being **characterized by** steps of:
A) receiving, from the enterprise device (2), a piece of advertisement type information that indicates at least one category associated with an advertisement material;
B) based on the piece of advertisement type information thus received, selecting a subset of the pieces of user information to serve as pieces of candidate user information, wherein each of the pieces of candidate user information includes at least one user attribute that matches the at least one category indicated in the piece of advertisement type information thus received;
C) sending, to the enterprise device (2), a piece of candidate information that indicates a quantity of the pieces of candidate user information thus selected, so that the enterprise device (2) sends a piece of advertisement information that is indicative of a viewer number and an amount of investment money and that includes the advertisement material in response to receiving the piece of candidate information;
D) determining the viewer number based on the piece of advertisement information after receiving the piece of advertisement information from the enterprise device (2);
E) selecting a number N of the pieces of candidate user information to serve as pieces of target user information, the number N being larger than or equal to the viewer number thus determined; and
F) performing an advertisement-pushing procedure with respect to target users that correspond respectively to the pieces of target user information,
wherein the advertisement-pushing procedure includes following sub-steps that are to be performed with respect to each of the target users:
F-1) sending, to the user device (3) that corresponds to the target user, a request for approval to provide the advertisement material on the user device (3);
F-2) after receiving the approval from the user device (3), sending, to the user device (3), the advertisement material and a piece of mission information that is related to an interactive mission, so that the user device (3) presents the advertisement material, guides the target user to complete the interactive mission, and sends a reply message associated with the interactive mission to the server (1);
F-3) after receiving the reply message from the user device (3), determining whether the content of the reply message fulfills a reward criterion; and
F-4) issuing a reward to the target user when it is determined that the content of the reply message fulfills a reward criteria.

2. The method of claim 1, the server (1) further being in communication with a financial platform (4) that manages multiple financial accounts including a service account and an enterprise account, the method further **characterized by** a following step that is to be performed after step C) and before step D) :
G) receiving a notification from the financial platform (4) that indicates that an amount of transfer money has been transferred from the enterprise account to the service account, and determines whether the amount of transfer money is not less than the amount of investment money;
wherein step D) is performed after it is determined that the amount of transfer money is not less than the amount of investment money.

3. The method of claim 1 or 2, **characterized in that** the advertisement-pushing procedure further includes a following sub-step that is to be performed with respect to each of the target users and before sub-step F-4) :
F-5) determining an amount of tokens as the reward when it is determined that the content of the reply message fulfills the reward criterion.

4. The method of claim 3, the server (1) storing and managing plural digital wallets in which tokens are deposited and which correspond respectively to the users, the method being **characterized in that** sub-step F-4) is to issue the reward to the target user by adding the amount of tokens into the digital wallet that corresponds to the target user.

5. The method of claim 4, the server (1) further being in communication with a financial platform (4) that manages multiple financial accounts including a service account and a user account which corresponds to the target user, the method being **characterized in that** the advertisement-pushing procedure further includes following sub-steps that are to be performed with respect to each of the target users and after sub-step F-4):
F-6) determining an amount of money that corresponds to the amount of tokens;
F-7) sending an instruction to the financial platform (4) to cause the financial platform (4) to transfer the amount of money from the service account to the user account; and
F-8) removing the amount of tokens from the digital wallet that corresponds to the target user.

6. The method of any of claims 3-5, **characterized in that** sub-step F-5) is to determine the amount of tokens based at least on a number of the user attributes included in the piece of user information that corresponds to the target user.

7. The method of any of claims 3-6, **characterized in that** sub-step F-5) is to determine the amount of tokens based on the amount of investment money and the viewer number.

8. The method of any of claims 1-7, **characterized in that** the piece of mission information includes a questionnaire, the interactive mission is to fill the questionnaire, the reply message is a finished questionnaire, and sub-step F-3) is to determine whether the content of the reply message fulfills the reward criterion by determining a correctness rate of the finished questionnaire and determining whether the correctness rate exceeds a predetermined threshold.

9. The method of any of claims 1-8, **characterized in that** the piece of mission information is indicative of a shop, the interactive mission is to make a purchase at the shop, the reply message is indicative of whether a purchase has been made by the target user, and sub-step F-3) is to determine whether the content of the reply message fulfills the reward criterion by determining whether the reply message indicates that a purchase has been made.

10. The method of any of claims 1-9, the server (1) further storing a count value, the method being **characterized in that**:
step D) further includes initializing the count value to be equal to the viewer number thus determined;
sub-step F-2) further includes decrementing the count value by one after receiving the approval from the user device (3);
the advertisement-pushing procedure further includes, after sub-step F-2), a sub-step of F-5) determining whether the count value equals zero; and
the method further comprises a step of G) terminating the advertisement-pushing procedure with respect to those of the target users who possess the user devices from which the approvals were not received when it is determined that the count value equals zero.

11. The method of any of claims 1-10, **characterized in that** step E) is to select the number N of the pieces of candidate user information to serve as the pieces of target user information by:
selecting top number N of the pieces of candidate user information in terms of a relevance level to serve as the pieces of target user information, where the relevance levels respectively of the pieces of user information are evaluated with respect to the piece of advertisement type information.

12. The method of any of claims 1-11, **characterized in that** each of the pieces of user information includes an image of an official document that serves as proof of some of the user attributes of the respective user.

13. The method of any of claims 1-12, the server (1) storing instruction codes that correspond to a shopping user interface which provides shopping guide information corresponding to the advertisement material, the method being **characterized in that** the advertisement-pushing procedure further includes a following sub-step that is to be performed with respect to each of the target users and after sub-step F-4):
F-5) sending the instruction codes to the user device (3) that corresponds to the target user, so that the user device (3) executes the instruction codes upon receiving the instruction codes and displays the shopping user interface on the user device (3).

14. The method of claim 13, **characterized in that** the advertisement-pushing procedure further includes a following sub-step that is to be performed with respect to each of the target users and after sub-step F-5):
F-6) receiving, from the user device (3), a piece of purchase information that is generated by the user device (3) after displaying the shopping UI, and generating a piece of shopping information based on the piece of purchase information, and including the piece of shopping information in the piece of user information that corresponds to the target user.
